# FASCICULE DE BREVET EUROPEEN

(11) **EP 3 902 708 B1**
(45) Date de publication et mention de la délivrance du brevet: **06.12.2023**
(21) Numéro de dépôt: 19809842.8
(22) Date de dépôt: 28.11.2019
(51) Int. Cl.: B60S 1/34, B60S 1/52, B60S 1/04

(54) **KIT DE REMPLACEMENT D'UN BALAI D'ESSUYAGE**
AUSTAUSCHSATZ FÜR WISCHERBLATT
WIPER BLADE REPLACEMENT KIT

(30) Priorité: 26.12.2018 FR 1874190
(43) Date de publication de la demande: 03.11.2021
(73) Titulaire: Valeo Systèmes d'Essuyage, 78322 Le Mesnil Saint Denis (FR)
(72) Inventeur: HOUSSAT, Stéphane, 63500 ISSOIRE (FR); GAUCHER, Vincent, 63500 ISSOIRE (FR); MOULEYRE, Guillaume, 63500 ISSOIRE (FR); JOMARD, Olivier, 63500 ISSOIRE (FR); CARRION, Julien, 63500 ISSOIRE (FR)
(74) Mandataire: Valeo Visibility
(86) Numéro de dépôt international: PCT/EP2019/082977
(87) Numéro de publication internationale: WO 2020/135970

(56) Documents cités:
- EP-A1- 2 813 402
- FR-A1- 2 971 471
- US-A1- 2010 089 417

## Description

La présente invention a trait au domaine des balais d'essuyage pour surface vitrée, notamment pour un pare-brise ou une lunette arrière, de véhicule automobile. Plus particulièrement, l'invention concerne un kit de remplacement d'un balai d'essuyage, particulier en ce qu'il permet d'intégrer une fonction de projection d'un fluide nettoyant.

Afin de faciliter le nettoyage des surfaces vitrées par l'intermédiaire d'un ou plusieurs balais d'essuyage, il est prévu de projeter du fluide nettoyant, et notamment du liquide lave-glace, sur la surface vitrée lorsque celle-ci n'est pas rendue humide par de l'eau de pluie. De nos jours, il est standard de projeter le liquide lave-glace via des buses fixes agencées au voisinage de la surface vitrée à nettoyer, et classiquement sur une partie inférieure de la surface vitrée, notamment du pare-brise ou de la lunette arrière du véhicule automobile.

Les équipementiers automobiles visent de nos jours à intégrer des fonctions sur les balais d'essuyage et notamment des buses d'éjection de fluide, le but étant de remplacer les buses fixes précédemment citées. Ces buses fixes présentent notamment comme inconvénient de produire un jet de fluide nettoyant dont la zone d'impact du fluide sur le pare-brise ou sur la lunette arrière est restreinte, certaines zones du pare-brise étant alors dépourvues de fluide. Par ailleurs, la projection de fluide nettoyant via ces buses fixes nécessitent une projection continue le temps du nettoyage, ce qui implique d'une part une surconsommation de fluide nettoyant et d'autre part le fait que le fluide peut couler sur la surface vitrée avant que le balai d'essuyage n'arrive sur la zone à nettoyer, de sorte que la projection de fluide nettoyant peut être pénalisante pour la visibilité du conducteur.

Dans ce contexte, les équipementiers automobiles ont proposé des balais d'essuyage intégrant la fonction de projection de fluide, via des conduits rapportés sur ou dans la structure du balai d'essuie-glace et percés d'orifices d'éjection, les conduits étant ainsi solidaires du déplacement en va-et-vient du balai d'essuyage. Ces balais d'essuyage sont équipés d'une pluralité d'orifices de projection afin d'améliorer la mouillabilité de la surface vitrée, notamment par une meilleure répartition du fluide de lavage à projeter sur la surface vitrée. L'art antérieur EP 2 262 671 A1 décrit un tel dispositif de projection de fluide sur une surface vitrée de véhicule automobile. FR 2 968 643 A1 divulgue un kit de remplacement similaire au préambule de la revendication 1.

L'intégration d'un balai d'essuyage tel que décrit dans le document mentionné ci-dessus sur un véhicule préexistant n'est pas envisageable en l'état, lorsqu'un tel véhicule est équipé à l'origine d'un balai d'essuyage dépourvu de dispositif de projection embarqué. Dans ce cas, tel que cela a été précisé précédemment, les buses de projection du système de projection sont alors positionnées de façon fixe autour de la surface vitrée du véhicule. Dès lors, le remplacement d'un balai standard par un balai équipé d'un dispositif de projection de fluide embarqué devrait être accompagné de l'implantation d'un système d'alimentation en fluide nettoyant spécifique ce qui, outre le fait de ne pas être économique, est encombrant. Par ailleurs, il convient de noter que la mise en place d'un balai d'essuyage avec un dispositif de projection de fluide embarqué implique à coup sur la modification d'habitude de l'utilisateur qui va privilégier une projection de fluide via le dispositif embarqué sur le balai plutôt que via les buses fixes agencées au voisinage de la surface vitrée. L'alimentation de ces buses en fluide nettoyant est alors superflue et implique des moyens encombrants non utilisés.

La présente invention a pour objectif de résoudre l'inconvénient décrit ci-dessus en concevant une solution permettant de remplacer un balai d'essuyage standard, pouvant notamment équiper un véhicule à l'origine, par un balai d'essuyage neuf et équipé d'un dispositif de projection de fluide embarqué. Le kit de remplacement que propose l'invention est particulièrement bien adapté pour être commercialisé dans les réseaux de vente de pièce automobile, appelés après-vente ou réseau de seconde monte.

La présente invention présente ainsi un kit de remplacement d'un balai d'essuyage monté à l'extrémité d'un bras d'entrainement d'essuie-glace de véhicule automobile, le kit comportant au moins un balai d'essuyage, équipé d'un dispositif de projection de fluide embarqué comportant au moins un canal de circulation et une canule d'entrée de fluide, au moins un tube de distribution fluidique configuré pour être raccordé à une extrémité audit balai d'essuyage et à son extrémité opposée à un circuit d'alimentation de fluide en provenance d'un réservoir du véhicule, le kit de remplacement comportant par ailleurs un raccord configuré pour permettre la liaison fluidique entre le circuit d'alimentation et l'au moins un tube de distribution fluidique ainsi qu'au moins un moyen de fixation pour maintenir en position le tube de distribution le long du bras d'entraînement d'essuie-glace.

Selon une série de caractéristiques de l'invention, prises seules ou en combinaison, on pourra prévoir que :
le kit de remplacement comporte en outre un tube d'alimentation fluidique configuré pour former le circuit d'alimentation apte à être raccordé à une extrémité au réservoir de fluide de nettoyage et à une autre extrémité au raccord.
le kit de remplacement comporte deux balais d'essuyage équipés respectivement d'un dispositif de projection de fluide embarqué et deux tubes de distribution fluidique respectivement associés à chacun des balais d'essuyage, le raccord étant configuré pour permettre la liaison fluidique de chacun des deux tubes de distribution fluidique au tube d'alimentation.
le raccord comporte au moins un dispositif anti-retour configuré pour empêcher la circulation de fluide depuis l'un ou l'autre des tubes de distribution vers le tube d'alimentation.
l'un des deux tubes de distribution est équipé d'un dispositif de réglage de la pression de fluide. On pourra notamment prévoir qu'un premier des deux balais d'essuyage est dédié à l'essuyage d'une partie de surface vitrée devant le conducteur du véhicule et qu'un deuxième des deux balais d'essuyage est dédié à l'essuyage d'une partie de surface vitrée devant le passager du véhicule, et prévoir que le tube de distribution associé au deuxième des deux balais d'essuyage est équipé d'un dispositif de réglage de la pression de fluide.
le dispositif de réglage est pré dimensionné pour prendre une position spécifique en fonction du dimensionnement d'un ou des balais d'essuyage du kit de remplacement, et/ou de la performance de la pompe associée au réservoir de fluide et au tube d'alimentation.
le kit de remplacement comporte en outre des organes de fixation pour la fixation du tube d'alimentation sur la structure du véhicule, lesdits organes de fixation étant autoadhésifs.
le kit de remplacement comporte en outre un collier de serrage de l'au moins un tube de distribution autour d'un élément de rappel élastique solidaire du bras d'entraînement d'essuie-glace.
le ou les balais d'essuyage sont configurés de telle sorte que la canule d'entrée de fluide est disposée au centre du balai, au niveau d'un connecteur du balai sur le bras d'entraînement d'essuie-glace. De manière alternative, on peut prévoir que la canule d'entrée est disposée sur l'un des embouts d'extrémité du balai.

L'invention concerne également un procédé de remplacement d'un balai d'essuie-glace équipant un véhicule muni d'un système de nettoyage avec des buses de projection fixes agencées au voisinage d'une surface vitrée à nettoyer par le balai d'essuie-glace, grâce au kit de remplacement tel que précédemment décrit, au cours duquel on réalise une étape de retrait du balai à remplacer du bras d'entraînement d'essuie-glace associé, une étape de pose du balai d'essuyage de remplacement équipé d'un dispositif de projection de fluide, une étape de raccordement d'un circuit de distribution du balai d'essuyage de remplacement et une étape de modification de l'alimentation de fluide issu d'un réservoir de fluide du véhicule. Au cours de ce procédé de remplacement, on prévoit par ailleurs que :
l'étape de pose du balai d'essuyage de remplacement consiste dans un ordre ou dans l'autre à assembler le balai d'essuyage de remplacement avec le tube de distribution fluidique, ces deux éléments étant prélevés dans le kit de remplacement, et à installer le balai d'essuyage sur le bras d'entrainement d'essuie-glace, et consistant ensuite à fixer le tube de distribution le long du bras d'entraînement par l'intermédiaire d'au moins un des moyens de fixation du kit de remplacement,
l'étape de raccordement d'un circuit de distribution du balai d'essuyage de remplacement consiste au moins à connecter un tube de distribution à un raccord prélevé dans le kit de remplacement,
l'étape de modification de l'alimentation consiste au moins à déconnecter un tuyau d'alimentation reliant le réservoir de fluide et les buses de projection agencées au voisinage de la surface à nettoyer, et à reconnecter le tuyau préalablement déconnecté ou un tuyau d'alimentation du kit de remplacement audit raccord.

D'autres caractéristiques, détails et avantages de l'invention ressortiront plus clairement à la lecture de la description donnée ci-après à titre indicatif en relation avec des dessins dans lesquels :
La [Figure 1] est une vue générale d'un véhicule équipé d'un dispositif standard d'essuyage de surface vitrée, à savoir un dispositif dans lequel des balais sont pilotés pour essuyer une surface vitrée sur laquelle peut être projeté du fluide via des buses fixes, ici au nombre de deux, réparties à proximité de ladite surface vitrée, la [Figure 1] rendant visible, en traits pointillés, un réservoir de fluide et des tuyaux d'alimentation reliant les buses au réservoir ;
La [Figure 2] est une représentation d'un kit de remplacement de balai selon un premier mode de réalisation de l'invention, dans lequel deux balais respectivement équipés d'un dispositif de projection de fluide embarqué sont prévus ainsi que des tuyaux et des moyens de fixation ;
La [Figure 3] est une vue en coupe d'un balai équipé d'un dispositif de projection de fluide embarqué faisant partie du kit de remplacement selon l'invention ;
La [Figure 4] est une vue similaire à celle de la [Figure 1], dans laquelle le véhicule est désormais équipé des deux balais du kit de remplacement de la [Figure 2], l'alimentation fluidique via le réservoir, toujours illustrée en traits pointillés, étant modifiée ;
La [Figure 5], la [Figure 6] et la [Figure 7] illustrent des étapes successives d'un procédé de remplacement d'un balai d'essuyage standard par un balai issu du kit de remplacement selon l'invention ;
La [Figure 8] est une représentation d'un kit de remplacement de balai selon un deuxième mode de réalisation de l'invention, dans lequel un unique balai équipé d'un dispositif de projection de fluide embarqué est prévu avec un unique tuyau et des moyens de fixation ;
La [Figure 9] est une illustration schématique du raccordement fluidique des balais d'un kit de remplacement similaire à celui de la [Figure 1], les tuyaux prévus dans le kit permettant ici le raccordement des balais à une pompe associée au réservoir de fluide ici non représenté ;
La [Figure 10] est une vue de détail d'un des tuyaux reliant l'un des balais du kit de remplacement, particulier en ce qu'il loge un dispositif de réglage de la pression de fluide circulant dans le tuyau.

Les figures exposent l'invention de manière détaillée pour mettre en oeuvre l'invention, lesdites figures pouvant bien entendu servir à mieux définir l'invention le cas échéant.

Il convient dans un premier temps de noter que sur ces figures, afin de faciliter la lecture, les éléments communs à plusieurs figures conservent la même référence numérique.

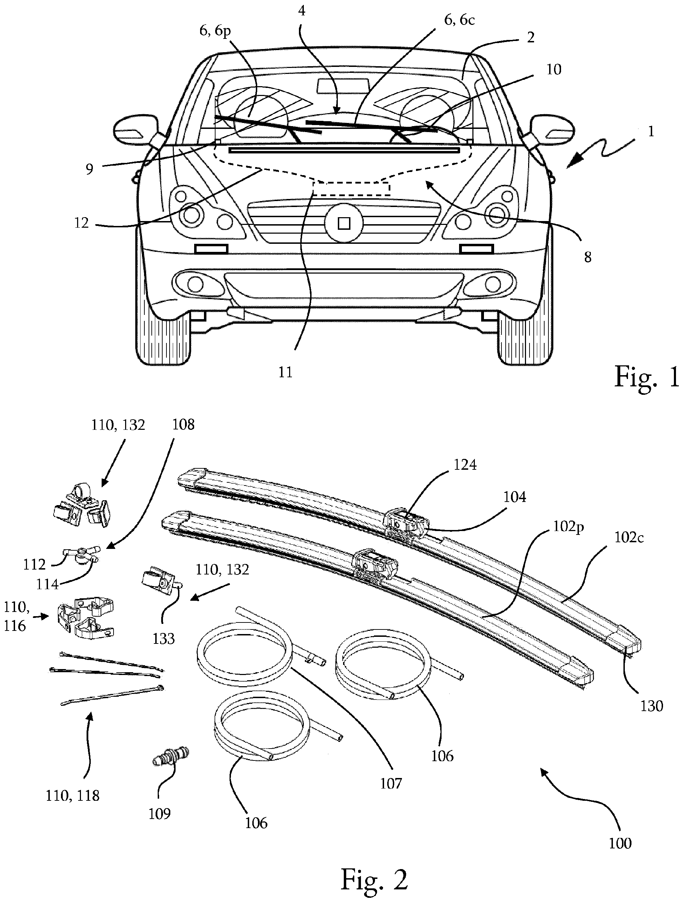

La [Figure 1] illustre un véhicule 1 comportant notamment un pare-brise formant une surface vitrée 2 à nettoyer. Un dispositif d'essuyage 4 approprié est prévu sur le véhicule et comporte notamment deux balais essuie-glace 6 et un système de projection de fluide 8 sur le pare-brise distinct de ces balais.

Notamment, on peut distinguer parmi les deux balais un balai conducteur 6c et un balai passager 6p, le balai conducteur étant agencé pour plus particulièrement nettoyer la portion de la surface vitrée 2 située devant le conducteur. Le balai conducteur 6c peut notamment être plus grand que le balai passager 6p pour balayer une surface plus importante.

Chaque balai est monté à l'extrémité libre d'un bras d'entrainement 10, entraîné en rotation par un dispositif d'entraînement ici non visible afin de permettre le balayage de la surface vitrée par le balai correspondant.

Le système de projection de fluide 8 sur le pare-brise est configuré pour projeter sur tout ou partie de la surface vitrée du fluide nettoyant, comme du liquide lave-glace, de l'air, de l'eau, notamment lorsque la surface vitrée n'est pas assez humide pour permettre son nettoyage par les balais.

Le système de projection de fluide 8 comporte une ou plusieurs buses 9 de projection, un réservoir de stockage 11 du fluide nettoyant choisi et un ensemble de tuyaux 12 pour relier fluidiquement le réservoir aux buses de projection. Plus particulièrement, les buses sont fixes et réparties au voisinage de la surface vitrée, ici en partie basse de la surface vitrée. Et les tuyaux sont configurés pour permettre le raccordement hydraulique au réservoir de chacune des buses pour l'amenée du fluide vers ces buses.

Dans l'exemple illustré sur la [Figure 1], les buses 9 sont raccordées hydrauliquement de façon simplifiée au réservoir de stockage 11, avec un tuyau 12 propre à chaque buse qui émane du réservoir. Il convient de noter que d'autres agencements peuvent être prévus et notamment un agencement dans lequel un tuyau principal relie l'une des buses au réservoir et un tuyau secondaire forme une dérivation du tuyau principal en amont de la buse pour alimenter une autre buse de projection.

Tel que cela a été précisé précédemment, l'invention prévoit un kit de remplacement 100 de balais permettant de substituer un balai standard 6c, 6p équipant le véhicule à l'origine, c'est-à-dire un balai dépourvu de système de projection de fluide embarqué, par un balai 102 équipé d'un dispositif de projection de fluide nettoyant embarqué. De la sorte, on permet par la suite une projection de fluide plus ciblée directement en amont du passage du balai sur la surface vitrée et on améliore le nettoyage de la surface vitrée en économisant la quantité de fluide utilisée. L'intérêt de l'utilisation d'un balai 102 équipé d'un dispositif de projection de fluide nettoyant embarqué est en soi connu et l'invention permet par la configuration du kit de remplacement 100 la fourniture d'un tel balai et le matériel nécessaire pour modifier le raccordement fluidique du réservoir. Il convient effet que le fluide ne soit plus dirigé vers les buses fixes au voisinage de la surface vitrée à nettoyer mais vers les balais.

Ainsi, le kit de remplacement 100 comporte au moins un balai d'essuyage 102 équipé d'un dispositif de projection de fluide embarqué et muni d'une canule d'entrée 104 de fluide pour permettre le raccordement du réservoir au dispositif de projection de fluide embarqué, et il comporte en outre au moins un tube de distribution fluidique 106 configuré pour être raccordé à une extrémité à la canule d'entrée 104 de ce balai d'essuyage 102 et pour être raccordé à son extrémité opposée au réservoir de stockage 11, que ce soit directement ou indirectement, par l'intermédiaire de raccord 108 permettant une dérivation d'un circuit de distribution de fluide. Le kit comporte en outre des moyens de fixation 110 pour maintenir en position le tube de distribution fluidique.

La [Figure 2] illustre un premier mode de réalisation du kit de remplacement selon l'invention, particulier en ce qu'il comprend deux balais d'essuyage 102 respectivement équipés d'un dispositif de projection de fluide nettoyant embarqué. On pourrait prévoir que le kit comprenne deux balais avec un seul, le balai conducteur, qui soit équipé d'un tel dispositif de projection. Le kit comprend également des tubes de distribution 106, configurés pour être raccordés respectivement à l'un des balais d'essuyage, et au moins un moyen de fixation 110 apte à permettre la fixation du tube sur le bras d'entraînement associé au balai.

Plus particulièrement ici, le kit de remplacement 100 comprend deux balais 102, une pluralité de tubes parmi lesquels des tubes de distribution 106 et un tube d'alimentation 107, une pluralité de moyens de fixation 110, et un raccord 108.

On distingue les tubes de distribution et le tube d'alimentation en ce que le tube d'alimentation 107 est apte à être raccordé au réservoir de stockage 11 de fluide nettoyant du véhicule, de manière à former un circuit d'alimentation de fluide, et en ce que les tubes de distribution 106 sont aptes à être raccordées aux canules d'entrée 104 ménagées sur les balais.

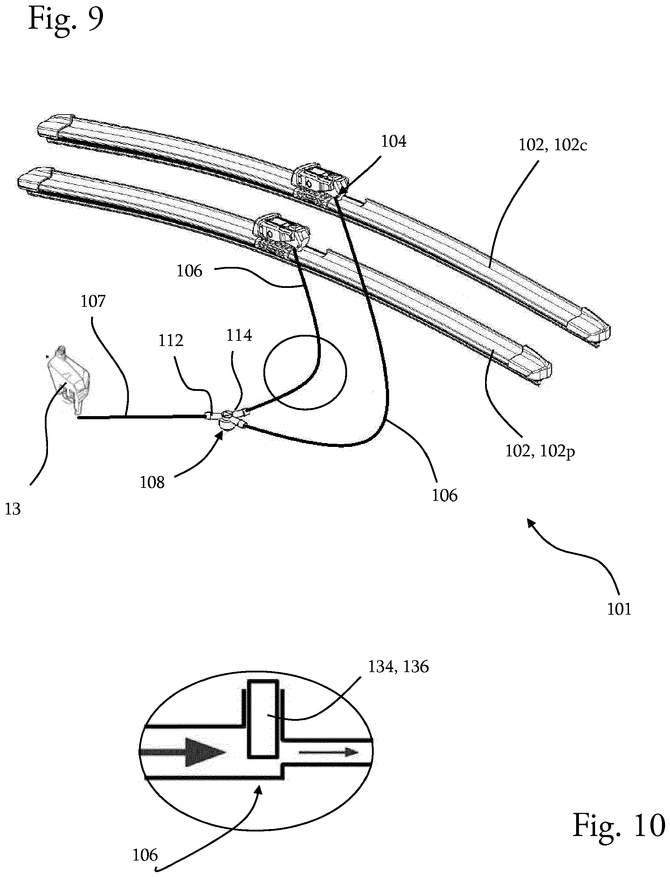

Le raccord 108 présente ici une forme de Y, avec un embout d'entrée 112 apte à être raccordé au tube d'alimentation 107 et deux embouts de sortie 114 aptes respectivement à être raccordés à l'un des tubes de distribution 106. On comprend que tel que cela est illustré sur la [Figure 9], le raccordement de tous ces composants permet l'amenée de fluide depuis le réservoir de stockage 11 vers le raccord 108 via le tube d'alimentation 107, le fluide étant alors dirigé à la fois vers le balai d'essuyage conducteur 102c via un embout de sortie 114 du raccord 108 et le tube de distribution 106 correspondant et vers le balai d'essuyage passager 102p via l'autre embout de sortie 114 du raccord et le tube de distribution 106 correspondant.

Le raccord 108 peut notamment comporter un dispositif anti-retour, par exemple sous forme d'un clapet à bille, ici non représenté. L'intérêt de ce dispositif anti-retour est de s'assurer que le fluide non projeté dans une opération de nettoyage précédente et présent entre le raccord et les balais d'essuyage soit disponible au plus vite pour l'opération de nettoyage suivante.

Les moyens de fixation 110 du kit de remplacement comprennent notamment une pluralité d'agrafes 116 configurées pour permettre la fixation de chaque tube de distribution 106 le long du bras d'entrainement 10 sur lequel est monté l'un des balais d'essuyage 102 du kit de remplacement 100 et pour permettre le cas échéant la fixation de chaque tube de distribution 106 sur la structure du véhicule entre le raccord 108 et la partie du tube maintenue par des agrafes sur le bras.

Les moyens de fixation 110 du kit peuvent comprendre en outre une pluralité de colliers de serrage 118 permettant d'ajuster la position de chacun des tubes 106, 107 par rapport aux éléments qu'ils longent, et par exemple pour ajuster la position d'un tube de distribution à la base du bras d'entrainement du balai correspondant.

Les moyens de fixation 110 du kit peuvent en outre comporter des bagues de support
Le balai d'essuyage 102 comporte d'une part un corps 120 formant support à une lame d'essuyage 122, après être plaqué contre la surface vitrée à nettoyer, et ici à au moins une vertèbre de rigidification 123, et d'autre part un connecteur 124, solidaire du balai et apte à permettre la fixation du balai sur le bras d'entraînement 10 correspondant.

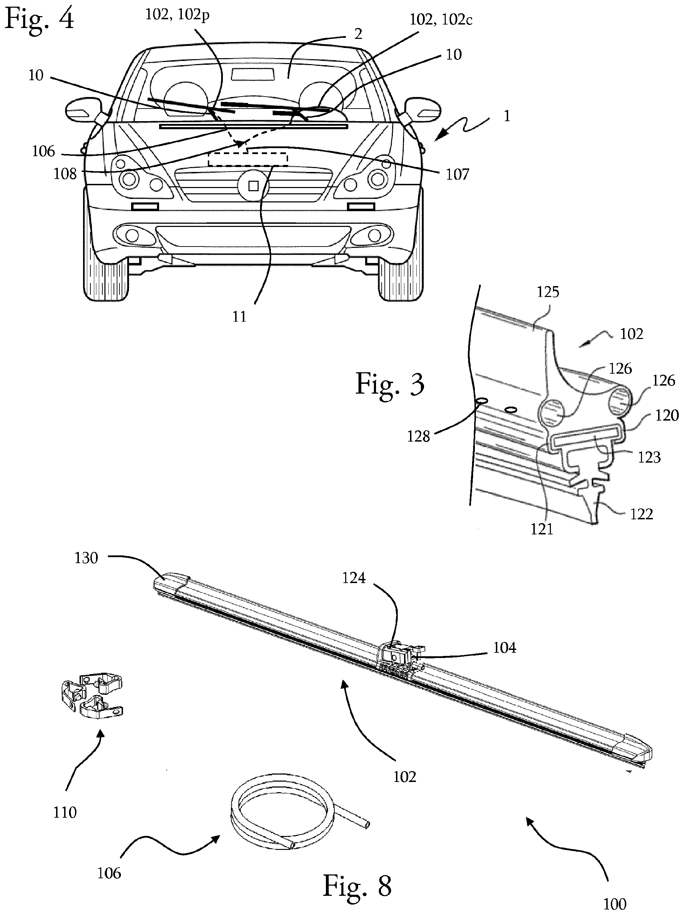

Le corps 120 du balai, tel qu'illustré par une vue en coupe sur la [Figure 3], comporte une base 121 et un déflecteur aérodynamique 125. Ici au niveau de la base, le corps du balai comporte au moins un canal de circulation 126 et une pluralité d'orifices 128 permettant l'éjection du fluide circulant dans le canal vers l'extérieur du balai. Le canal de circulation 126 est alimenté en fluide via la canule d'entrée 104 précédemment évoquée. La canule, le canal et les orifices forment le dispositif de projection embarqué tel qu'il a pu être évoqué précédemment.

La canule d'entrée 104 est ici disposée au niveau du connecteur 124, tel que cela est représenté schématiquement sur la [Figure 2], mais on comprendra que sans sortir du contexte de l'invention, la canule d'entrée 104 pourrait être disposée au niveau d'un embout d'extrémité 130 du balai, le balai d'essuyage 102 comportant ici, dans l'exemple illustré, deux embouts d'extrémité 130 disposés respectivement à chaque extrémité longitudinale de ce balai.

Le tube de distribution 106 est dimensionné pour être emmanché sur la canule d'entrée 104, de sorte que le fluide circulant dans le tube de distribution peut pénétrer dans le dispositif de projection embarqué sur le balai.

Selon l'invention, le tube de distribution 106, raccordé au connecteur 124 du balai d'essuyage 102, est ensuite fixé le long du bras d'entraînement 10 par l'intermédiaire des agrafes de fixation 116 du kit de remplacement.

Sur la [Figure 4], on a illustré le véhicule une fois les balais d'essuyage 102 du kit de remplacement 100 montés sur leur bras d'entrainement 10 respectif. On comprend qu'il résulte de ce remplacement une configuration dans laquelle les balais sont alimentés en fluide nettoyant. De la sorte, une demande de nettoyage d'une surface vitrée comprenant une projection de fluide nettoyant sur le pare-brise génère le pompage de fluide nettoyant dans le réservoir de stockage 11, par l'intermédiaire d'une pompe 13 associée au réservoir 11 et illustrée sur la [Figure 9], et l'envoi de fluide nettoyant en direction des balais d'essuyage 102 via successivement le tube d'alimentation 107, le raccord 108 et les tubes de distribution 106. Le fluide nettoyant circule à l'intérieur du ou des canaux de circulation 126 formé(s) dans le corps du balai et il est projeté sur la surface vitrée via les orifices de projection 128.

Il convient de noter qu'une fois le remplacement effectué, les buses fixes 9 disposées au voisinage de la surface vitrée restent en position mais ne sont plus actives, car plus alimentées en fluide.

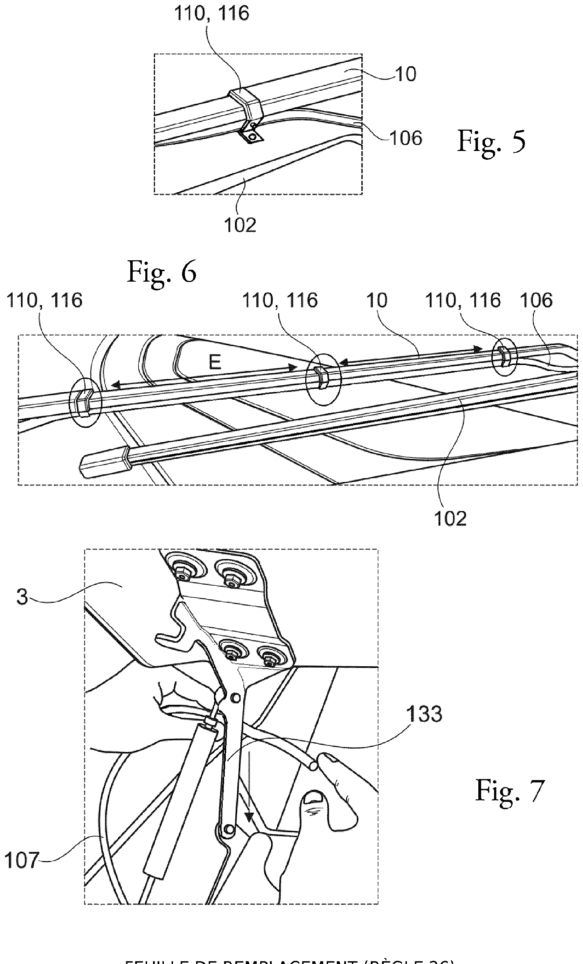

On va maintenant décrire, en se référant notamment à la [Figure 5], la [Figure 6] et la [Figure 7], le procédé de remplacement de balais standards 6, montés à l'origine sur le véhicule, par deux balais d'essuyage 102 respectivement équipés d'un dispositif de projection de fluide embarqué, le procédé utilisant le kit de remplacement 100 selon le premier mode de réalisation tel qu'il vient d'être décrit.

Dans une première étape, l'utilisateur positionne les bras d'entraînement 10 de manière à pouvoir retirer les balais standards 6 de ces bras. Préalablement ou bien à la suite de ceci, l'utilisateur assemble entre eux un balai d'essuyage 102 du kit de remplacement 100, c'est-à-dire un balai équipé d'un dispositif de projection embarqué, et un tube de distribution 106 de fluide. A cet effet, l'utilisateur emmanche une extrémité du tube de distribution 106 autour, ou à l'intérieur, de la canule d'entrée 104 du balai. Le tube de distribution 106 et le balai d'essuyage 102 faisant partie du même kit de remplacement 100 selon l'invention, les dimensions de l'extrémité du tube de distribution 106 à emmancher et les dimensions correspondantes de la canule d'entrée 104, ici le diamètre, sont déterminées pour que le montage à force soit d'une part possible et d'autre part suffisant pour assurer l'étanchéité de l'assemblage. A titre d'exemple non limitatif, les diamètres internes des tubes de distribution sont de l'ordre de 3.5 millimètres et des diamètres externes des canules d'entrée sont de l'ordre de 5 millimètres. On comprend ainsi qu'il n'est pas nécessaire de prévoir des colliers de serrage pour assurer le maintien et donc l'étanchéité de cet emmanchement.

L'utilisateur monte alors cet ensemble de deux éléments sur le bras d'entraînement 10, en faisant coopérer l'extrémité du bras avec le connecteur 124 du balai d'essuyage. L'utilisateur se retrouve alors avec un balai d'essuyage 102 qui est rendu solidaire du bras 10 et un tube de distribution 106 de fluide qui est fixé à une extrémité au connecteur 124 du balai et qui est libre à son autre extrémité.

L'utilisateur récupère ensuite une première agrafe de fixation 116 du kit de remplacement 100, et clippe cette agrafe autour du bras 10, pour ensuite fixer le tube de distribution 106 le long du bras par l'intermédiaire de cette agrafe de fixation 116. On obtient alors un montage tel qu'illustré sur la [Figure 5]. L'utilisateur récupère ensuite les agrafe de fixation 116 similaires et les clippe autour du bras 10, à intervalles réguliers, pour ensuite fixer le tube de distribution le long du bras par l'intermédiaire de chacune des agrafes de proche en proche. Il en résulte un montage tel qu'illustré sur la [Figure 6], avec un écart entre deux agrafes de fixation 116 voisines, représenté par une flèche E sur cette figure, de l'ordre de 10 à 20 cm. Il convient de noter que le kit de remplacement peut comporter un nombre d'agrafes de fixation variable en fonction de la longueur du bras sur lequel on rapporte le balai d'essuyage 102 à remplacer. Le kit de remplacement 100 prévoit avantageusement des agrafes de fixation 116 permettant de rendre solidaires ces balais à tout type de bras en permettant la fixation du tube de distribution 106 le long de tout type de bras.

Une agrafe de fixation particulière est prévue pour la fixation du tube de distribution 106 le long du bras 10 à proximité d'un élément de rappel élastique du bras. De façon connue, un ressort est agencé dans le volume du bras pour forcer le bras et le balai qu'il porte contre la vitre à essuyer. Lorsque le bras d'entrainement est manipulé par l'utilisateur et notamment relevé pour permettre le changement d'un balai ou le nettoyage de la lame d'essuyage du balai, le ressort est étiré. Il est dès lors avantageux selon l'invention de prévoir une agrafe de fixation au plus proche de l'extrémité du ressort afin de s'assurer que la position du tube par rapport au ressort soit figée et que le tube ne gêne pas le déploiement du bras en coinçant le ressort.

Dans le même ordre d'idée, l'utilisateur peut alors utiliser le collier de serrage 118 pour entourer le tube de distribution 106 et le bras 10 au voisinage de l'extrémité opposée du ressort, c'est-à-dire l'extrémité disposée le plus proche de la structure du véhicule en saillie de laquelle s'étend le bras d'entrainement. Il convient que le collier de serrage soit fermé de manière à ne pas serrer trop fortement le tube et l'écraser. Le collier de serrage fourni dans le kit de remplacement peut notamment présenter une limitation de serrage adaptée au diamètre extérieur du tube de distribution présent dans le même kit de remplacement, ladite limitation de serrage étant conçue de manière à permettre toutefois un léger écrasement du tube pour limiter le glissement du collier le long du tube.

L'utilisateur fait ensuite passer l'extrémité libre du tube de distribution 106 à travers un passage formé dans la structure du véhicule, à la base du bras d'entraînement 10 du balai correspondant. Chaque tube de distribution 106 passe à travers un passage qui lui est propre et qui peut notamment être choisi parmi les possibilités offertes par les éléments structurels fixes ou amovibles standards du véhicule.

L'utilisateur raccorde ensuite chaque extrémité libre de tube de distribution 106 à l'un des embouts de sortie 114 du raccord en Y 108 récupéré dans le kit de remplacement 100 selon l'invention. Là encore, il est notable que les embouts de sortie 114 et les tubes de distribution 106 présentent des dimensions, notamment des diamètres, adaptées pour un emmanchement des embouts de sortie à l'intérieur des tubes de distribution sans qu'il soit nécessaire de prévoir des colliers de serrages additionnels. L'utilisateur peut ajuster la longueur des tubes de distribution 106 pour que le raccord 108 soit positionné sous le capot du véhicule à un endroit approprié, avec des tubes de distribution suffisamment tendus pour éviter qu'ils interfèrent avec des éléments du véhicule logés sous capot. Le cas échéant, l'utilisateur peut utiliser des organes de fixation autoadhésifs 132, qui peuvent également être prévus dans le kit de remplacement dans l'ensemble des moyens de fixation 110 tel que cela est visible sur la [Figure 2], pour figer la position des tubes sous le capot. L'utilisateur peut facilement distinguer dans le kit de remplacement de l'invention les agrafes de fixation 116 à utiliser pour la fixation des tubes de distribution le long d'un bras et les organes de fixation 132 pour la fixation des tubes de distribution le long d'une structure véhicule sous capot. En effet, les agrafes de fixation 116 présentent une tête formant siège de réception du tube et un corps comportant des moyens de serrage du bras par encliquetage, susceptibles d'entourer le bras. Et les organes de fixation 132 présentent également une tête formant siège de réception du tube mais un corps avec un plateau dont la face tournée à l'opposé du siège est munie d'un revêtement autoadhésif. De manière alternative ou complémentaire aux solutions de fixation adhésives, ces organes de fixation peuvent comporter une vis de serrage 131 pour une fixation plus robuste de l'organe de fixation dans une zone adaptée du véhicule, notamment une zone où un alésage taraudé est déjà prévu sur la structure du véhicule.

A la suite de cette connexion du raccord en Y 108 aux tubes de distribution 106, ou préalablement sans que cela ait ici une importance selon l'invention, l'utilisateur réalise le raccordement du tube d'alimentation 107 prévu dans le kit de remplacement entre le raccord en Y 108 d'un côté et le réservoir de stockage 11 du fluide nettoyant ou la pompe 13 associée.

Dans ce cas où le kit de remplacement 100 comporte un tube d'alimentation 107, l'utilisateur retire le tube d'alimentation existant sur le véhicule standard et le remplace par le tube d'alimentation fourni par le kit de remplacement. Comme dit précédemment, la connexion du tube d'alimentation se fait facilement sans organes additionnels avec le raccord en Y car ces éléments sont tous deux issus du kit de remplacement. Le kit peut également comprendre dans ce cas un élément de raccordement 109, et par exemple un élément de raccordement sans clapet anti-retour tel qu'illustré sur la [Figure 2], permettant d'assurer la connexion étanche entre le tube d'alimentation 107 du kit de remplacement et l'embout du réservoir de stockage ou de la pompe sur lequel le tube d'alimentation spécifique au kit de remplacement 100 est raccordé.

De manière alternative, que le kit de remplacement ait un tube d'alimentation ou non, l'utilisateur peut conserver le tube d'alimentation standard, en laissant en place la connexion au réservoir ou à la pompe associée et en débranchant seulement le tube d'alimentation du côté des buses de projection 9 fixes disposées autour de la surface vitrée, puis en raccordant ce tube d'alimentation avec le raccord en Y 108. On comprend qu'ici l'élément de raccordement 109 précédemment évoqué servirait à assurer la fixation étanche du tube d'alimentation et du raccord en Y qui ne sont pas issus tous les deux du kit de remplacement.

Dans les deux cas, que le tube d'alimentation reste le tube d'alimentation d'origine ou bien corresponde au tube d'alimentation 107 du kit de remplacement, il est intéressant que l'utilisateur le fasse passer derrière la charnière 133 d'ouverture du capot 3,tel qu'illustré sur la [Figure 7], afin d'éviter les pincements de ce tube d'alimentation lors des ouvertures et fermetures du capot. On comprend que cette problématique ne se posait pas lorsque le tube d'alimentation reliait le réservoir aux buses de projection fixes puisqu'aucun jeu n'était nécessaire pour relier les buses.

Il résulte de ce qui précède que, tel qu'illustré sur la [Figure 8], le kit de remplacement doit comporter essentiellement au moins un balai d'essuyage 102 équipé d'un dispositif de projection embarqué, au moins un tube de distribution 106, et au moins un raccord 108.

La [Figure 9] illustre un ensemble de nettoyage 101 équipant un véhicule 1 après le remplacement des balais standards 6 par deux balais d'essuyage 102 équipés d'un dispositif de projection embarqué. On distingue sur cette figure le balai d'essuyage conducteur 102c et le balai d'essuyage passager 102p, tous deux équipés d'un dispositif de projection embarqué, le balai d'essuyage conducteur 102c étant ici plus long que le balai d'essuyage passager 102p.

Un des tubes de distribution 106 connectant fluidiquement l'un des balais du kit de remplacement, et plus particulièrement le tube associé au balai d'essuyage passager 102p, est particulier en ce qu'il loge un dispositif de réglage de la pression de fluide 134 circulant dans le tube.

Le dispositif de réglage de la pression consiste en un organe piloté 136, disposé en travers de la section de passage du tube de distribution et susceptible de prendre différentes positions allant d'une position d'obstruction totale à une position de dégagement complet, en passant par une ou plusieurs positions d'obstruction partielle. L'évolution de la section de passage permet de jouer sur la pression de fluide amené à être projeté par le dispositif de projection embarqué sur l'un et l'autre des balais.

Dans l'exemple illustré sur la [Figure 10], l'organe piloté 136 consiste en un organe monté mobile en translation selon une direction perpendiculaire au sens d'écoulement du fluide circulant dans le tube, sans que ce mode de réalisation soit limitatif de l'invention.

On comprend qu'un tel dispositif de réglage pourrait être mis en oeuvre sur un tube de distribution lorsque le kit de remplacement ne comporte qu'un seul balai d'essuyage équipé d'un dispositif de projection de fluide embarqué. Dans ce cas, le dispositif de réglage peut être configuré pour que chacune des positions spécifiques soit fonction du dimensionnement du balai d'essuyage associé et de la performance de la pompe associée au réservoir de fluide.

Lorsque le kit de positionnement comporte deux balais d'essuyage et que l'un des deux est équipé d'un dispositif de réglage, ce dernier peut être configuré pour que chacune des positions spécifiques soit fonction des dimensionnements des balais d'essuyage du kit et de la performance de la pompe associée au réservoir de fluide.

L'organe piloté 136 présente ici une position avantageuse, obstruant partiellement la section de passage du fluide, de sorte qu'une faible quantité de fluide sous pression s'écoule vers le balai d'essuyage passager 102p. De la sorte, on s'assure qu'une grande quantité de fluide est dirigée vers l'autre tube de distribution, c'est-à-dire celui distribuant le balai d'essuyage conducteur 102c, et que du fluide en quantité peut être projeté de façon homogène par chacun des orifices de projection formés dans le balai d'essuyage conducteur 102c.

On comprend à la lecture de ce qui précède que la présente invention propose un kit de remplacement configuré pour permettre d'équiper un véhicule avec des balais « Aquablade » alors que le véhicule était équipé à l'origine de balais standards dépourvus de buses de projection de fluide embarqués, ces buses étant prévues à l'origine sur le pourtour du pare-brise. Il est particulièrement notable que le kit de remplacement selon l'invention permet un montage avantageux en ce que le raccordement hydraulique du balai peut être réalisé simplement et rapidement sur le réservoir de fluide lave-glace du véhicule.

L'invention ne saurait toutefois se limiter aux moyens et configurations décrits et illustrés ici, et elle s'étend également à tout moyen ou configuration équivalents et à toute combinaison technique opérant de tels moyens. En particulier, le nombre et la forme des agrafes utilisées pour fixer au bras le tube d'alimentation peut varier. A titre d'exemple supplémentaire non limitatif, la partie du tube d'alimentation agencée entre le bras et le réservoir de stockage de fluide pourrait prendre d'autres chemins que celui indiqué dans la description détaillée d'un exemple de montage.

## Revendications

1. Kit de remplacement (100) d'un balai d'essuyage monté à l'extrémité d'un bras (10) d'entrainement d'essuie-glace de véhicule automobile, le kit comportant au moins un balai d'essuyage (102, 102c, 1 02p), équipé d'un dispositif de projection de fluide embarqué comportant au moins un canal de circulation (126) et une canule d'entrée (104) de fluide, **caractérisé en ce que** le kit de remplacement comporte par ailleurs au moins un tube de distribution fluidique (106) configuré pour être raccordé à une extrémité audit balai d'essuyage (102, 102c, 102p) et à son extrémité opposée à un circuit d'alimentation de fluide en provenance d'un réservoir (11) du véhicule, un raccord (108) configuré pour permettre la liaison fluidique entre le circuit d'alimentation et l'au moins un tube de distribution fluidique (106) ainsi qu'au moins un moyen de fixation (110, 116) pour maintenir en position le tube de distribution le long du bras (10) d'entraînement d'essuie-glace.

2. Kit de remplacement selon la revendication 1, **caractérisé en ce qu'**il comporte en outre un tube d'alimentation fluidique (107) configuré pour former le circuit d'alimentation apte à être raccordé à une extrémité au réservoir (11) de fluide de nettoyage et à une autre extrémité audit raccord.

3. Kit de remplacement selon la revendication 1 ou 2, **caractérisé en ce qu'**il comporte deux balais d'essuyage (102, 102c, 102p) équipés respectivement d'un dispositif de projection de fluide embarqué et deux tubes de distribution fluidique (106) respectivement associés à chacun des balais d'essuyage, le raccord (108) étant configuré pour permettre la liaison fluidique de chacun des deux tubes de distribution fluidique au circuit d'alimentation de fluide.

4. Kit de remplacement selon l'une des revendications précédentes, **caractérisé en ce que** le raccord (108) comporte au moins un dispositif anti-retour configuré pour empêcher la circulation de fluide depuis l'un ou l'autre des tubes de distribution (106) vers le circuit d'alimentation.

5. Kit de remplacement selon l'une des revendications 3 ou 4, dans lequel l'un des deux tubes de distribution (106) est équipé d'un dispositif de réglage de la pression de fluide (134, 136).

6. Kit de remplacement selon la revendication précédente, **caractérisé en ce que** le dispositif de réglage (134, 136) est pré dimensionné pour prendre une position spécifique en fonction du dimensionnement d'un ou des balais d'essuyage (102, 102c, 102p) du kit de remplacement (100).

7. Kit de remplacement selon l'une des revendications précédentes, en combinaison avec la revendication 2, **caractérisé en ce qu'**il comporte en outre des organes de fixation (132) pour la fixation du tube d'alimentation sur la structure du véhicule, lesdits organes de fixation étant autoadhésifs.

8. Kit de remplacement selon l'une des revendications précédentes, **caractérisé en ce qu'**il comporte en outre un collier de serrage (118) de l'au moins un tube de distribution (106) autour d'un élément de rappel élastique solidaire du bras (10) d'entraînement d'essuie-glace.

9. Kit de remplacement selon l'une des revendications précédentes, **caractérisé en ce que** le ou les balais d'essuyage (102, 102c, 102p) sont configurés de telle sorte que la canule d'entrée (104) de fluide est disposée au centre du balai, au niveau d'un connecteur (124) du balai sur le bras (10) d'entraînement d'essuie-glace.

10. Procédé de remplacement d'un balai équipant un véhicule (1) muni d'un système de nettoyage avec des buses de projection (9) fixes agencées au voisinage d'une surface vitrée (2) à nettoyer par le balai, grâce au kit de remplacement (100) selon l'une des revendications 1 à 8, au cours duquel on réalise une étape de retrait du balai à remplacer du bras (10) d'entraînement d'essuie-glace associé, une étape de pose du balai d'essuyage de remplacement (102, 102c, 102p) équipé d'un dispositif de projection de fluide, une étape de raccordement d'un circuit de distribution du balai d'essuyage de remplacement et une étape de modification de l'alimentation de fluide issu d'un réservoir (11) de fluide du véhicule, et au cours duquel
ladite étape de pose du balai d'essuyage de remplacement (102, 102c, 102p) consiste dans un ordre ou dans l'autre à assembler le balai d'essuyage de remplacement avec un tube de distribution fluidique (106), ces deux éléments étant prélevés dans le kit de remplacement (100), et à installer le balai d'essuyage sur le bras d'entrainement d'essuie-glace, et consistant ensuite à fixer le tube de distribution le long du bras d'entraînement par l'intermédiaire d'au moins un des moyens de fixation (110) du kit de remplacement (100),
ladite étape de raccordement d'un circuit de distribution du balai d'essuyage de remplacement consiste au moins à connecter un tube de distribution (106) à un raccord (108) prélevé dans le kit de remplacement (100),
ladite étape de modification de l'alimentation consiste au moins à déconnecter un tuyau d'alimentation reliant le réservoir de fluide et les buses de projection agencées au voisinage de la surface à nettoyer, et à reconnecter le tuyau préalablement déconnecté ou un tuyau d'alimentation (107) du kit de remplacement (100) audit raccord (108).

## Patentansprüche

1. Austauschsatz (100) für ein Wischerblatt, das am Ende eines Scheibenwischerantriebsarms (10) eines Kraftfahrzeugs montiert ist, wobei der Satz mindestens ein Wischerblatt (102, 102c, 102p) aufweist, das mit einer integrierten Vorrichtung zum Ausspritzen von Flüssigkeit ausgestattet ist, die mindestens einen Zirkulationskanal (126) und eine Eintrittskanüle (104) für Flüssigkeit aufweist, **dadurch gekennzeichnet, dass** der Austauschsatz darüber hinaus mindestens einen Flüssigkeitsverteilungsschlauch (106) aufweist, der so konfiguriert ist, dass er an einem Ende mit dem Wischerblatt (102, 102c, 102p) und an seinem entgegengesetzten Ende mit einem Versorgungskreis für Flüssigkeit aus einem Behälter (11) des Fahrzeugs verbunden ist, ein Verbindungsstück (108), das so konfiguriert ist, dass es die Flüssigkeitsverbindung zwischen dem Versorgungskreis und dem mindestens einen Flüssigkeitsverteilungsschlauch (106) ermöglicht, sowie mindestens ein Befestigungsmittel (110, 116), um den Verteilungsschlauch entlang des Scheibenwischerantriebsarms (10) in Position zu halten.

2. Austauschsatz nach Anspruch 1, **dadurch gekennzeichnet, dass** er darüber hinaus einen Flüssigkeitsversorgungsschlauch (107) aufweist, der so konfiguriert ist, dass er den Versorgungskreis bildet, der geeignet ist, an einem Ende mit dem Behälter (11) für Reinigungsflüssigkeit und an einem anderen Ende mit dem Verbindungsstück verbunden zu werden.

3. Austauschsatz nach Anspruch 1 oder 2, **dadurch gekennzeichnet, dass** er zwei Wischblätter (102, 102c, 102p) aufweist, die jeweils mit einer integrierten Vorrichtung zum Ausspritzen von Flüssigkeit ausgestattet sind, und zwei Flüssigkeitsverteilungsschläuche (106), die jeweils mit jedem der Wischblätter verbunden sind, wobei das Verbindungsstück (108) so konfiguriert ist, dass es die Flüssigkeitsverbindung zwischen jedem der beiden Flüssigkeitsverteilungsschläuche und dem Versorgungskreis für Flüssigkeit ermöglicht.

4. Austauschsatz nach einem der vorhergehenden Ansprüche, **dadurch gekennzeichnet, dass** das Verbindungsstück (108) mindestens eine Rücklaufsperre aufweist, die so konfiguriert ist, dass sie die Zirkulation von Flüssigkeit von einem der Flüssigkeitsverteilungsschläuche (106) in den Versorgungskreis verhindert.

5. Austauschsatz nach einem der Ansprüche 3 oder 4, wobei einer der beiden Flüssigkeitsverteilungsschläuche (106) mit einer Vorrichtung zum Einstellen des Drucks der Flüssigkeit (134, 136) ausgestattet ist.

6. Austauschsatz nach dem vorhergehenden Anspruch, **dadurch gekennzeichnet, dass** die Einstellvorrichtung (134, 136) so voreingestellt ist, dass sie eine bestimmte Position in Abhängigkeit von der Dimensionierung eines oder mehrerer Wischblätter (102, 102c, 102p) des Austauschsatzes (100) einnimmt.

7. Austauschsatz nach einem der vorhergehenden Ansprüche in Verbindung mit Anspruch 2, **dadurch gekennzeichnet, dass** er darüber hinaus Befestigungselemente (132) zur Befestigung des Flüssigkeitsverteilungsschlauchs an der Fahrzeugstruktur aufweist, wobei die Befestigungselemente selbstklebend sind.

8. Austauschsatz nach einem der vorhergehenden Ansprüche, **dadurch gekennzeichnet, dass** er darüber hinaus eine Schelle (118) zum Festklemmen des mindestens einen Verteilungsschlauchs (106) um ein elastisches Rückstellelement aufweist, das fest mit dem Scheibenwischerantriebsarm (10) verbunden ist.

9. Austauschsatz nach einem der vorhergehenden Ansprüche, **dadurch gekennzeichnet, dass** das Wischerblatt oder die Wischerblätter (102, 102c, 102p) so konfiguriert sind, dass die Eintrittskanüle (104) für Flüssigkeit in der Mitte des Wischerblatts an einem Anschlussstück (124) des Wischerblatts an dem Scheibenwischerantriebsarm (10) angeordnet ist.

10. Verfahren zum Austauschen eines Wischerblatts, mit dem ein Fahrzeug (1) ausgestattet ist und das mit einem Reinigungssystem mit festen Spritzdüsen (9) ausgestattet ist, die in der Nähe einer durch das Wischerblatt zu reinigenden Glasfläche (2) angeordnet sind, dank des Austauschsatzes (100) nach einem der Ansprüche 1 bis 8, in dessen Verlauf man einen Schritt des Entfernens des zu ersetzenden Wischerblatts vom zugehörigen Scheibenwischerantriebsarm (10) durchführt, einen Schritt des Anbringens des Austauschwischerblatts (102, 102c, 102p), das mit einer Vorrichtung zum Ausspritzen von Flüssigkeit ausgestattet ist, einen Schritt des Anschließens eines Verteilungskreises des Austauschwischerblatts und einen Schritt des Änderns der Flüssigkeitsversorgung aus einem Flüssigkeitsbehälter (11) des Fahrzeugs, und in dessen Verlauf
der Schritt des Anbringens des Austauschwischerblatts (102, 102c, 102p) in der einen oder anderen Reihenfolge aus dem Zusammenbau des Austauschwischerblatts mit einem Flüssigkeitsverteilungsschläuche (106) besteht, wobei diese beiden Elemente aus dem Austauschsatz (100) entnommen werden, und aus dem Anbringen des Wischerblatts an dem Scheibenwischerantriebsarm, und darin besteht, anschließend den Verteilungsschlauch entlang des Antriebsarms über mindestens eines der Befestigungsmittel (110) des Austauschsatzes (100) zu befestigen,
der Schritt des Anschließens eines Verteilungskreises des Austauschwischerblatts zumindest das Anschließen eines Verteilungsschlauchs (106) an ein Verbindungsstück (108) aufweist, das dem Austauschsatz (100) entnommen wird,
der Schritt des Änderns der Versorgung zumindest das Trennen eines Versorgungsschlauchs aufweist, der den Flüssigkeitsbehälter und die in der Nähe der zu reinigenden Fläche angeordneten Spritzdüsen verbindet, und das Wiederverbinden des zuvor getrennten Schlauchs oder eines Versorgungsschlauchs (107) des Austauschsatzes (100) mit dem Verbindungsstück (108) aufweist.

## Claims

1. A replacement kit (100) for a wiper mounted at the end of a wiper arm (10) of a motor vehicle, the kit comprising at least one wiper (102, 102c, 102p) equipped with an inbuilt fluid spraying device comprising at least one circulation canal (126) and a fluid inlet cannula (104), **characterised in that** the replacement kit further comprises at least one fluid distribution tube (106) configured to be coupled at one end to said wiper (102, 102c, 102p) and at its opposite end to a fluid supply circuit supplying fluid coming from a reservoir (11) of the vehicle, a coupling (108) configured to allow fluidic connection between the supply circuit and the at least one fluid distribution tube (106), and at least one fixing means (110, 116) for holding the distribution tube in position along the wiper arm (10).

2. The replacement kit as claimed in claim 1, **characterized in that** it further comprises a fluid supply tube (107) configured to form the supply circuit able to be coupled at one end to the reservoir (11) of cleaning fluid and at another end to said coupling.

3. The replacement kit as claimed in claim 1 or 2, **characterized in that** it comprises two wipers (102, 102c, 102p) respectively equipped with an inbuilt fluid spray device and two fluid distribution tubes (106) respectively associated with each of the wipers, the coupling (108) being configured to allow fluidic connection of each of the two fluid distribution tubes to the fluid supply circuit.

4. The replacement kit as claimed in one of the preceding claims, **characterized in that** the coupling (108) comprises at least one nonreturn device configured to prevent fluid from circulating from one or other of the distribution tubes (106) toward the supply circuit.

5. The replacement kit as claimed in either of claims 3 and 4, wherein one of the two distribution tubes (106) is equipped with a fluid pressure regulating device (134, 136).

6. The replacement kit as claimed in the preceding claim, **characterized in that** the regulating device (134, 136) is pre-dimensioned to adopt a specific position according to the sizing of one or more wipers (102, 102c, 102p) of the replacement kit (100).

7. The replacement kit as claimed in one of the preceding claims in combination with claim 2, **characterized in that** it further comprises fixing members (132) for fixing the supply tube to the structure of the vehicle, said fixing members being self-adhesive.

8. The replacement kit as claimed in one of the preceding claims, **characterized in that** it further comprises a hose clamp (118) clamping the at least one distribution tube (106) around an elastic return element secured to the wiper arm (10).

9. The replacement kit as claimed in one of the preceding claims, **characterized in that** the wiper or wipers (102, 102c, 102p) are configured in such a way that the fluid inlet cannula (104) is positioned at the center of the wiper, in the region of a connector (124) connecting the wiper to the wiper arm (10).

10. A method for replacing a wiper fitted to a vehicle (1) equipped with a cleaning system having fixed spray nozzles (9) arranged in the vicinity of a glazed surface (2) that is to be cleaned by the wiper, using the replacement kit (100) as claimed in one of claims 1 to 8, during which method there is performed a step of removing the wiper that is to be replaced from the associated wiper arm (10), a step of fitting the replacement wiper (102, 102c, 102p) equipped with a fluid spray device, a step of connecting a distribution circuit of the replacement wiper and a step of modifying the supply of fluid coming from a fluid reservoir (11) of the vehicle, and during which method
said step of fitting the replacement wiper (102, 102c, 102p) consists, in one order or the other, in assembling the replacement wiper with a fluid distribution tube (106), these two elements being taken from the replacement kit (100), and in installing the wiper on the wiper arm, and then consisting in fixing the distribution tube along the arm using at least one of the fixing means (110) from the replacement kit (100),
said step of connecting a distribution circuit of the replacement wiper consisting at least in connecting a distribution tube (106) to a coupling (108) taken from the replacement kit (100),
said step of modifying the supply consisting at least in disconnecting a supply pipe connecting the fluid reservoir and the spray nozzles arranged in the vicinity of the surface that is to be cleaned, and reconnecting the previously-disconnected pipe, or a supply pipe (107) from the replacement kit (100), to said coupling (108).
